# EUROPEAN PATENT APPLICATION

(11) **EP 2 685 100 A1**
(43) Date of publication of application: **15.01.2014**
(21) Application number: 12175627.4
(22) Date of filing: 09.07.2012
(51) Int. Cl.: F03G 3/00, F01K 27/00, F03B 17/00

(54) **Heat engine**

(71) Applicant: Rüede, Philipp, 8832 Wollerau (CH)
(72) Inventor: Rüede, Philipp, 8832 Wollerau (CH)
(74) Representative: Rutz & Partner

(57) **Abstract**

The heat engine (1) comprising an engine wheel (100) with at least two receptacles (11A, 12A; 11B, 12B; 11C, 12C) opposing one another and at least one working substance (5, 5A; 5B; 5C) that is transferrable in at least one transfer channel (13; 13A, 13B, 13C) between said receptacles (11; 11A, 12A; 11B, 12B; 11C, 12C) under the impact of thermal energy. According to the invention the engine wheel (100) comprises a first wheel-plate (10) with a plurality of walls (15A, 15B, 15C, 102) on at least one side that delimit the receptacles (11; 11A, 12A; 11B, 12B; 11C, 12C) and the at least one transfer channel (13; 13A, 13B, 13C), which are further delimited by a second wheel-plate (20) that is connected to the first wheel-plate (10).

## Description

### BACKGROUND OF THE INVENTION

This invention relates in general to a heat engine that performs mechanical work when exposed to a temperature gradient.

The invention relates in particular to a heat engine that comprises a working substance that is transferred under the influence of thermal energy in a higher temperature state from a lower position to a higher position, where it is transferred from the higher temperature state to a lower temperature state and by gravity back to the lower position.

Heat engines or motors of this kind are known from [1], US243909A; [2], US2384168A; [3], US7694515B2 and [4], Mother Earth News, April 1976, "Solar Engine: Wallace Minto's Newest Invention". E.g. in [1], US243909A, a motor is defined that comprises a straight tube having a receptacle at each end and allowing the passage of enclosed volatile liquid, said working substance, from one receptacle to the other under the action of heat.

These known heat engines typically exhibit complex and voluminous structures. Consequently heat engines of this kind require considerable manufacturing efforts and have a severely restricted application potential. Due to the large dimensions and the complex structures, the described heat engines can hardly be integrated into a modern mechanical or electromechanical system, particularly into a compact mechanical or micro-mechanical system.

The present invention is therefore based on the object of creating an improved heat engine comprising an engine wheel with receptacles opposing one another and a working substance that is transferred between said receptacles under the impact of thermal energy.

In particular, a heat engine shall be created that can be manufactured with reduced manufacturing efforts, small dimensions and a simple structure.

The inventive heat engine shall have a higher efficiency and shall be usable in various applications and systems.

Particularly, the improved heat engine shall be designed in such a way that it can easily be incorporated into a drive system and can easily be coupled to a mechanical system.

Alternatively, the improved heat engine shall be designed in such a way that it can advantageously be used as or incorporated into a device of art, fashion or amusement or science, particularly as a part of a watch or an electrical generator. The inventive heat engine can for example advantageously be used as an energy source for remote scientific installations, such as sensor systems, radio receivers and radio transmitters.

### SUMMARY OF THE INVENTION

This object is achieved with a heat engine as defined in claim 1. Preferred embodiments of the invention are defined in further claims.

The inventive heat engine comprises an engine wheel with at least two receptacles opposing one another and at least one working substance that is transferrable in at least one transfer channel between said receptacles under the impact of thermal energy. According to the invention the engine wheel comprises a first wheel-plate with a plurality of walls on at least one side that delimit the receptacles and the at least one transfer channel, which are further delimited by a second wheel-plate that is connected to the first wheel-plate.

The inventive heat engine can be manufactured with significantly reduced manufacturing costs simply from a single wheel-plate that is covered by a second wheel-plate in such a manner that the receptacles and transfer channels of the heat engine are closed and tightly sealed. In order to tightly seal the connection between the first and the second wheel-plate various sealing elements and sealing technics can be applied. The walls can be provided with grooves that are filled with a sealing element such as an O-ring. Alternatively a sealing gasket may be applied between the first and the second wheel-plate. This sealing gasket may be without any opening or may correspond to the structure of the wall system in order to tightly seal the connections of opposing wall elements provided on the first and the second wheel-plate. Still further, the first and the second wheel-plate may comprise threaded flange elements that can be screwed into one another, thus producing a tight connection that can further be provided with sealing grease, such as vacuum grease. When tightening the threaded connection any sealing element provided between the first and the second wheel-plate will be compressed, thus completing the sealing process. Alternatively flange elements of the first and the second wheel-plate can be connected by welding.

During the production process any suitable pressure can be applied to the receptacles, such as vacuum, ambient pressure or high pressure in order to obtain a desirable boiling point for the working substance and/or in order to improve the sealing of the receptacles.

A significant advantage of the inventive heat engine is that the engine wheel can be manufactured in any size and dimension. It can be integrated with simple coupling means into mechanical drive systems, even micromechanical systems, e.g. as a generator that provides electrical current to an accumulator or directly to an electric motor.

Engine wheels can be manufactured from metal or plastic that however exhibits at least in the range of the receptacles a high thermal conductivity. For this purpose the plastic is preferably provided with thermally conducting elements that may be integrated into the moulding mass.

Receptacles and interconnecting transfer channels can easily be provided in the first and even in the second wheel-plate. For example the receptacles and interconnecting transfer channels are cut out of or embossed into the wheel-plates. Further, the wheel-plates can be moulded. Hence, the heat engine can be produced with high precision with only a few simple processing steps, including producing the receptacles and transfer channels, entering the working substance and closing the receptacles and transfer channels. Transfer channels can be routed in several ways in order to interconnect the related receptacles.

With one of the mentioned production processes, a wall structure can be provided on at least one side of the first wheel-plate that delimits the receptacles and the at least one transfer channel. The walls preferably extend perpendicularly from the first wheel-plate and adjoin the second wheel-plate, thus enclosing one or more separate transfer systems, each provided with a working substance that can travel forth and back between at least two receptacles.

The engine wheel of the inventive heat engine may also comprise a first and a second wheel-plate, which are complementary to one another and comprise complementary wall structures. The first and/or second wheel-plate of the engine wheel preferably comprises a central hub or an inner driving collar that may be coupled to an axle or may be provided with a ball bearing that allows the engine wheel to turn freely. The engine wheel may also be coupled otherwise to a mechanical system. The engine wheel may for example be designed as a cog wheel comprising a peripheral toothing that engages in a cog wheel of a mechanical system.

Further, the first and/or second plate of the engine wheel preferably comprises an outer or peripheral collar which forms one of the walls that peripherally delimits receptacles and/or transfer channels.

In a heat engine with two, three or more transfer systems the related transfer channels may be
a) routed along the central side of the engine wheel; or
b) routed along the peripheral side of the engine wheel; or
c) routed partially along the central side and partially along the peripheral side of the wheel; or
d) routed with their complete length alternately along the central and the peripheral side of the wheel.

Preferably the transfer channels are routed alternately on the inner and outer side of the engine wheel so that a completely regular system of transfer channels and receptacles results. However the system of transfer channels and receptacles may also be arranged in an irregular manner. E.g., on one side of the engine wheel, channels may be routed along the outer side of the receptacles and on the opposing side of the engine wheel along the inner side of the receptacles.

In a preferred embodiment at least one of the walls, preferably a wall of each transfer system, leads from the central hub or the inner driving collar to the outer or peripheral collar, thus forming walls of at least a first and a second receptacle and a related transfer channel. In preferred embodiments the at least one of the walls comprises a first wall segment aligned radially and/or a second wall segment aligned peripherally. The first and/or second wall segments, which are extensions or branches of said wall, separate receptacles from the related transfer channel in such a way that the communication port of this receptacle, through which the working substance is entering or leaving, is peripherally positioned. After this receptacle has been turned into the lowermost position, the vapour generated in this receptacle cannot escape through the communication port as long as liquid is present. Hence, when the lowermost receptacle is heated the working substance is pressed out of this receptacle by vapour pressure.

The channel structure can freely be designed following the teaching of the present application by creating identical, similar or new channel structures, which adhere to the above described principles.

Inventive engine wheels preferably comprise numerous transfer systems, each provided with at least one transfer channel. In an alternative embodiment the engine wheel comprises n receptacles that communicate via a common transfer channel. This engine wheel comprises n receptacles that are delimited by the same number n of walls,
a) which are adjoining the outer collar and extend therefrom,
b) which are inclined into the same direction by an angle w, which angle w is within the range from 15°-25°,
c) which have a length the length that corresponds approximately to the difference between the radius of the engine wheel and the radius of the central hub and
d) which delimit with their end pieces the communication ports of the receptacles.

The first and second wheel-plates of the above described engine wheels are connected to one another so that the receptacles and interconnecting transfer channels are tightly sealed. The engine wheel preferably comprises at least one sealing element seated in a groove provided in the first and/or the second wheel-plate. Hence, when the first and the second wheel-plate are connected together, e.g. by means of mounting screws, the sealing element, such as an O-ring made of rubber, is compressed and is thus filling the gap between the wheel-plates.

In a preferred embodiment the engine wheel is peripherally provided with magnets that are interacting with at least one, preferably with a plurality of bearing magnet sequentially aligned with opposing polarity in such a way that the engine wheel is magnetically suspended. In this state the engine wheel can freely turn without losses. In addition or alternatively a coil or coil system is preferably provided in which the peripheral magnets cause a change of the magnetic field and thus induce electrical currents. Hence the inventive heat engine can be used as electrical generator.

In order to avoid the loss of thermal energy a first heat exchanger is preferably provided at the lower side of the engine wheel, where thermal energy is applied, and a second heat exchanger is provided at the upper side of the engine wheel, where thermal energy is recuperated and transferred back to the first heat exchanger.

The at least one working substance and the pressure within the receptacles are selected in such a way that a boiling point is obtained, which is suitable in view of the thermal conditions expected at the installation site.

The engine wheel has preferably a circular form or a regular or irregular polygonal form that however is balanced so that substantial imbalances of weight in any position of the engine wheel results from the transfer of the working substances only. Hence, the engine wheel can freely be designed and used as a drive element of a technical system or as a part of a device of art, fashion or amusement.

### BRIEF DESCRIPTION OF THE DRAWINGS

Below, the invention is described more closely with referenced to drawings, in which:
- Fig. 1: shows an inventive heat engine 1 with an engine wheel 100 comprising a first wheel-plate 10 having a structure of walls 15A, 15B, 15C, 102 that delimit three transfer systems A, B, C, each comprising a working substance 5A, 5B, 5C contained in two receptacles 11A, 12A; 11B, 12B; 11C, 12C that are interconnected by a related transfer channel 13A, 13B, 13C;
- Fig. 2: shows one of the transfer systems A of the engine wheel 100 of figure 1;
- Fig. 3: shows all three transfer systems A, B, C of the engine wheel 100 of figure 1;
- Fig. 4: shows the first wheel-plate 10 of the engine wheel 100 of figure 1 in spatial view;
- Fig. 5: shows a second embodiment of an inventive heat engine 1 with a first wheel-plate 10 comprising a structure with eight wall elements 15₁, 15₂, ..., 15₈ that delimit eight receptacles 11₁, 11₂, ..., 11₈ , which communicate with one another through a common transfer channel 13;
- Fig. 5a: shows the engine wheel 100 of figure 5 from the other side;
- Fig. 6: shows the heat engine 1 of figure 5 in spatial view;
- Fig. 7a: shows the heat engine 1 in the embodiment of figure 1 or in the embodiment of figure 5 with an axle 6 placed in the hub 101 and with a peripheral toothing 61;
- Fig. 7b: shows the heat engine 1 of figure 7a with a ball bearing 65 inserted in the central hub 101;
- Fig. 8: shows the heat engine 1 in the embodiment of figure 1 or in the embodiment of figure 5 equipped with a plurality of magnets 72 that interact with a bearing magnet 71 on the lower side and with a coil or coil system 73 on the upper side of the engine wheel 100;
- Fig. 9: shows an inventive heat engine 1 with the engine wheel 100 suspended in a housing 3 that embraces the lower part of the engine wheel 100 and acts as a heat collector; and
- Fig. 10: shows an inventive heat engine 1 with the engine wheel 100 suspended in a housing 3 that comprises sections of high and low thermal conductivity 31, 32.

### DETAILED DESCRIPTION

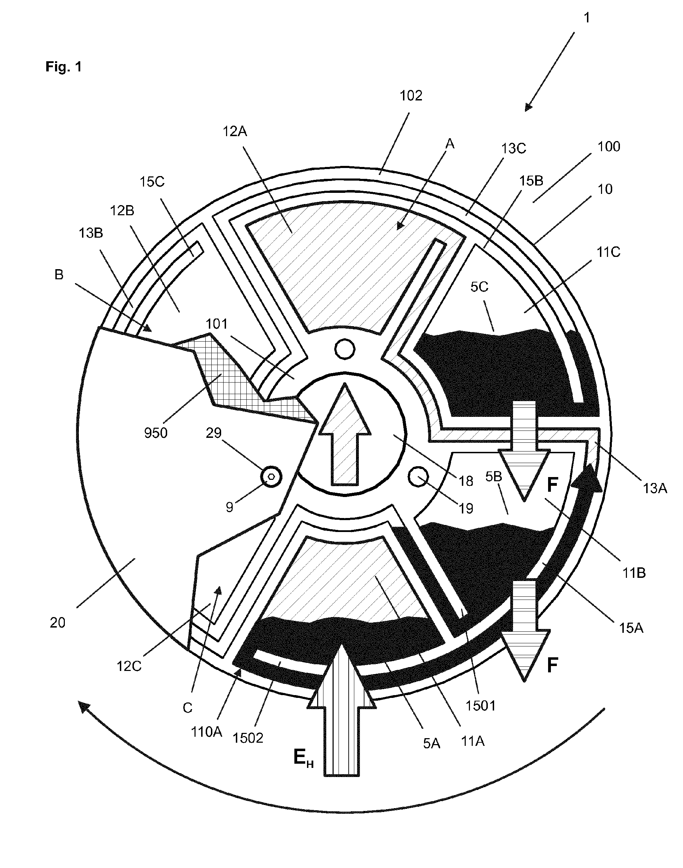

Figure 1 shows an inventive heat engine 1 with an engine wheel 100. The engine wheel 100 comprises a first wheel-plate 10 with a structure of walls 15A, 15B, 15C, 102 that delimit three transfer systems A, B, C, each comprising a working substance 5A, 5B, 5C that is travelling through a transfer channel 13A, 13B, 13C forth and back between two receptacles 11A, 12A; 11B, 12B; 11C, 12C. The working substances 5A, 5B, 5C, which may be identical, have a boiling point at the pressure present within the receptacles 11A, 12A; 11B, 12B; 11C, 12C, which lies between a higher temperature exhibited on the lower side of the engine wheel 100 and a lower temperature exhibited on the upper side of the engine wheel 100. A desired boiling point for a given working substance 5A, 5B, 5C can therefore be reached by providing a suitable pressure inside the receptacles 11A, 12A; 11B, 12B; 11C, 12C. The working substance 5A, 5B, 5C is for example a low boiling point liquid, such as liquid ammonia, chlorofluorocarbons, hydrofluorocarbons, propane, carbon dioxide, dichloromethane, chloroethane or butane that evaporates at a comparably low temperature. The first wheel-plate 10 is covered by a second wheel-plate 20 that closes the transfer systems A, B, C so that each working substance 5A, 5B, 5C is encapsulated in the related transfer system A; B; C.

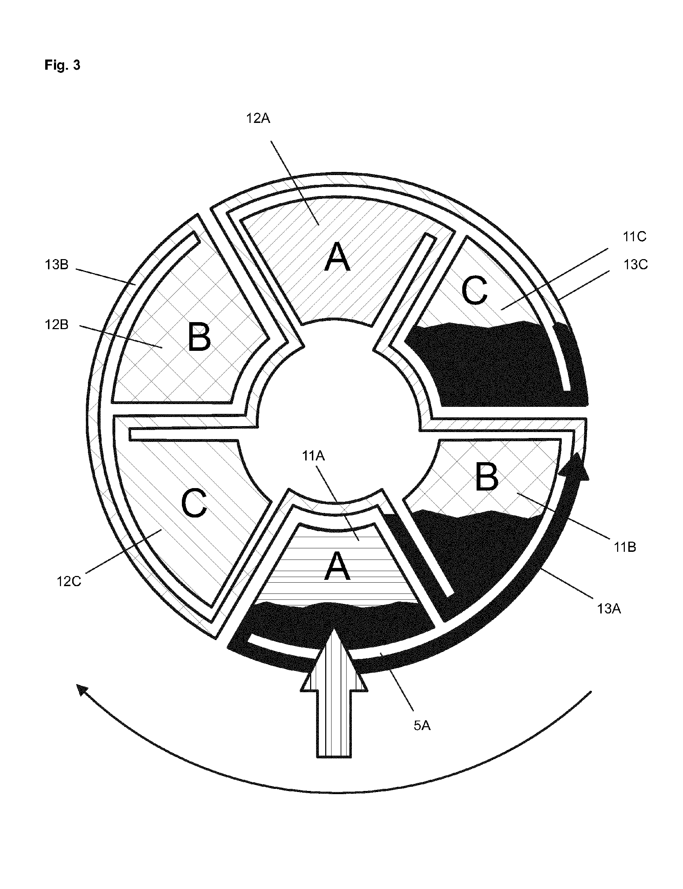

The first wheel-plate 10 exhibits a regular wall structure that includes three identical fractions or thirds. The system of transfer channels 13A, 13B, 13C is selected in such a way that three identical transfer systems A, B, C are obtained, which are shown in figure 3.

The regular structure of the first wheel-plate 10 facilitates manufacturing processes, since three identical processes can be repeated if the receptacles 11A, 12A; 11B, 12B; 11C, 12C and transfer channels 13A, 13B, 13C are cut out of the first metal plate 10. Alternatively, the structure of receptacles 11A, 12A; 11B, 12B; 11C, 12C and transfer channels 13A, 13B, 13C can be embossed into the first wheel-plate 10. Further, the first wheel-plate 10 can be moulded by using a coining or complementary female part of the wall structure which is delimiting the receptacles 11A, 12A; 11B, 12B; 11C, 12C and transfer channels 13A, 13B, 13C. The second wheel-plate 20 may be a simple cover with two flat sites. Alternatively the second wheel-plate 20 may exhibit a mirror image of the first wheel-plate 10, thus complementing the first wheel-plate 10 and doubling the volume of the receptacles 11A, 12A; 11B, 12B; 11C, 12C and transfer channels 13A, 13B, 13C. The second wheel-plate 20 comprises bores 29 designed for receiving screws 9 that are introduced into threaded bores 19 provided in the central part of the first wheel-plate 10.

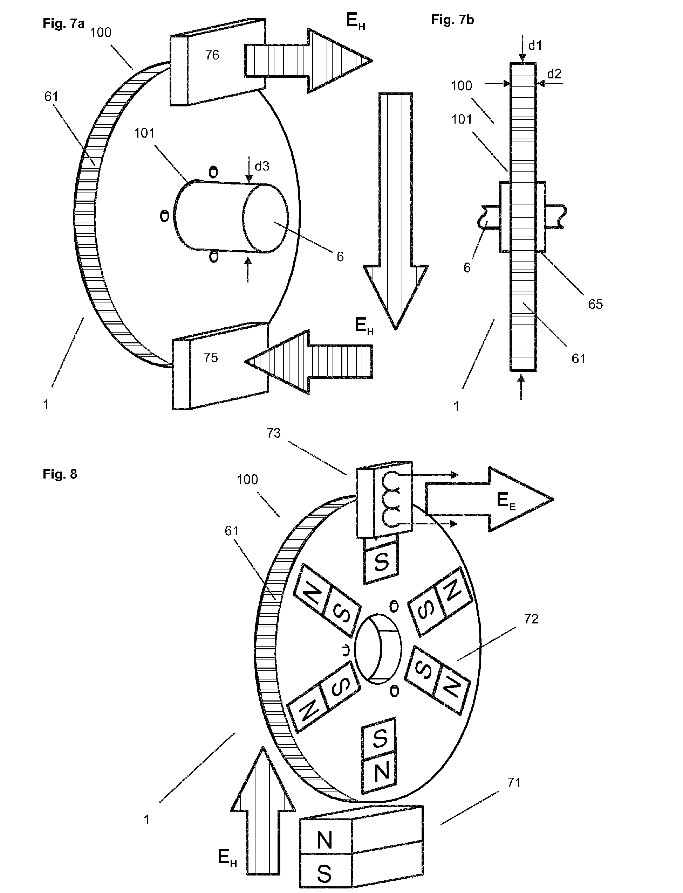

The central part of the first wheel-plate 10 exhibits a central hub or an inner driving collar 101 with an opening 18, which is designed to receive an axle 6 (see figure 7a) or a ball bearing (see figure 7b). Peripherally, the first wheel-plate 10 is provided with an outer flange or peripheral wall 102 that is part of the wall system and that delimits parts of the transfer channels 13A, 13B, 13C, e.g. transfer channels 13A that, starting from the peripherally located communication port 110A of receptacle 11A, is routed along the outer side of the receptacles 11A, 11B; then in front of next receptacle 11C radially towards the centre part 101, further below receptacle 11C and radially back to the peripherally located communication port 120A of next receptacle 12A. The communication ports of all receptacles 11A, 11B, 11C, 12A, 12B, 12C are therefore located on the outer periphery of the engine wheel 100. The other transfer channels 13B and 13C exhibit the same structure as the first transfer channel 13A thus allowing the realisation of a regular structure. It is shown that a major wall element 15A, 15B, 15C is provided for every third of the first wheel-plate 10 that extends from the central hub or inner wall 101 to the peripheral wall 102 and which preferably comprises extensions or branches 1501, 1502 that delimit sections of the transfer channels 13A, 13B, 13C within the range of the receptacles 11A, 11B, 11C, 12A, 12B, 12C in order to arrange the communication ports 110A, 120A peripherally. The first wall extension 1501 is aligned radially and the second wall extension 1502 is aligned peripherally.

It is further shown that the receptacles 11A, 11B and 11C are filled with working substances 5A, 5B, 5C, while the remaining receptacles 12A, 12B and 12C are empty. The gravitational force F applied to the substances 5B, 5C in the receptacles 11B and 11C causes an imbalance of the forces applied to the engine wheel 1 thus turning the engine wheel 100 clockwise.

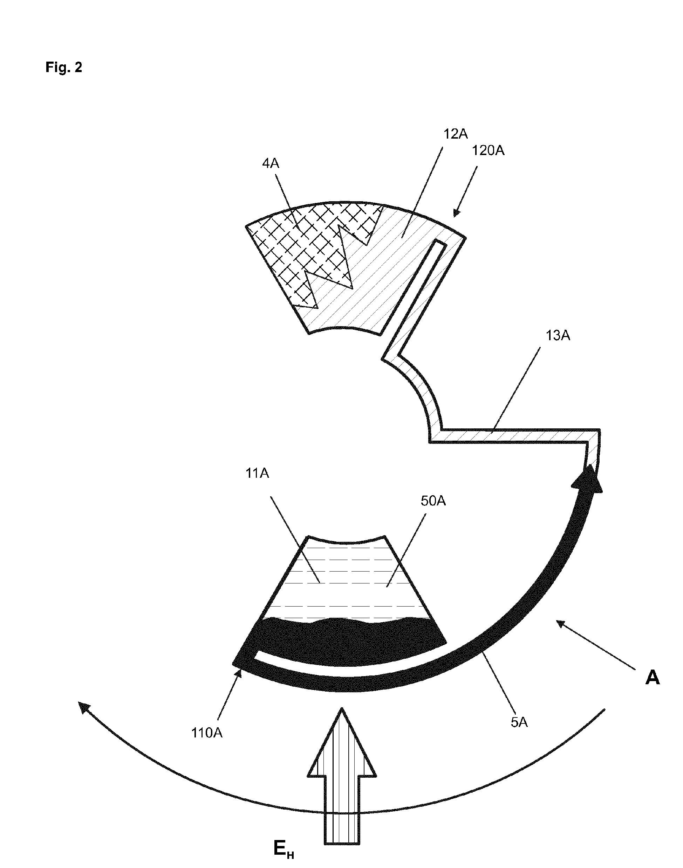

The function of the heat engine 1 is described below with reference to figures 1 and 2. In operation, thermal energy E_{H} provided by a heat source is transferred into the lowermost receptacle 12A. Moving thermal energy E_{H} into the lowermost receptacle 12A and thus into the related working substance 5A increases the pressure of vapour 50A emanating from the working substance 5A. The increased vapour pressure presses the working substance 5A out of the first receptacle 12A and through the communication port 110A, the transfer channel 13A and the communication port 120A into the corresponding uppermost second receptacle 12A of the same transfer system A. In the second receptacle 12A the working substance 5A is now cooled down so that in this uppermost position no back pressure is present which would oppose the transfer of liquid. As the uppermost second receptacle 12A is filled with the working substance 5A, the gravitational force F applied to this substance 5A reinforces the momentum, which turns the engine wheel 100 clockwise around its central axis. As the second receptacle 12A then reaches the lowermost position, a reverse action takes place which transfers the working substance 5A from the second receptacle 12A now at the lowermost position to the first receptacle 11A now at the uppermost position. In order to maintain this process a temperature gradient is required with one endpoint above and one endpoint below the boiling point of the working substance 5A.

Further, in order to accelerate the processes, elements 111, e.g. elements with ribs or flanges, with high thermal conductivity may be applied in the range of the receptacles 11A, 11B, 11C, 12A, 12B, 12C. However, if the engine wheel 1 is made of metal, good thermal conductivity is already present. In preferred embodiments, zones between the receptacles 11A, 11B, 11C, 12A, 12B, 12C are provided with a smaller cross-section, thus reducing the exchange of thermal energy across the engine wheel 100, which would reduce the temperature gradient.

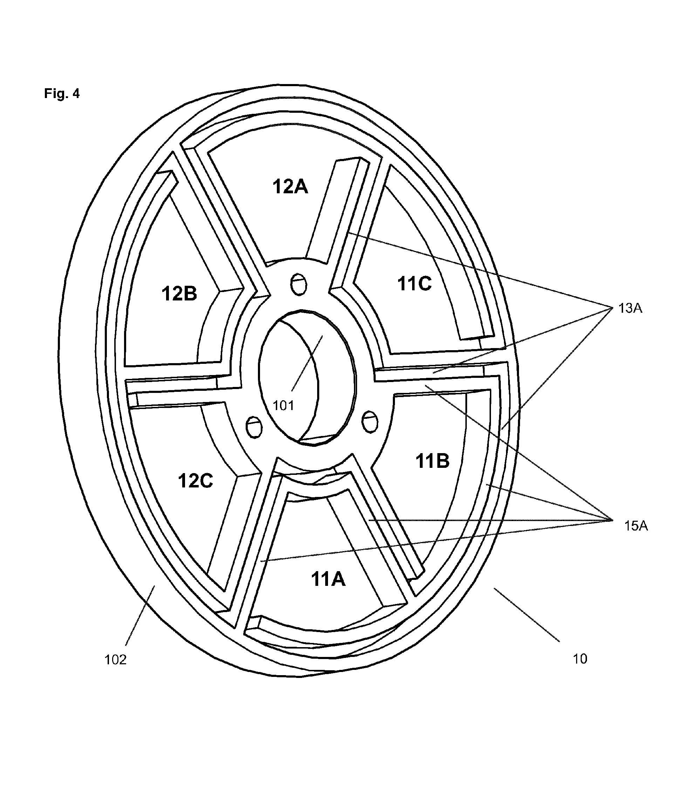

Figure 4 shows the first wheel-plate 10 of the engine wheel 100 of figure 1 in spatial view with the receptacles 11A, 11B, 11C, 12A, 12B, 12C that are part of three independent transfer systems A, B, C. The wall elements 15A, 15B delimiting the receptacles 11A, 12A and the transfer channel 13A, which leads from the communication port 110A of the first receptacle 11A to the communication port 120A of the second receptacle 12A of the first transfer systems A are marked with numerals 15A, 15B for explanation purposes.

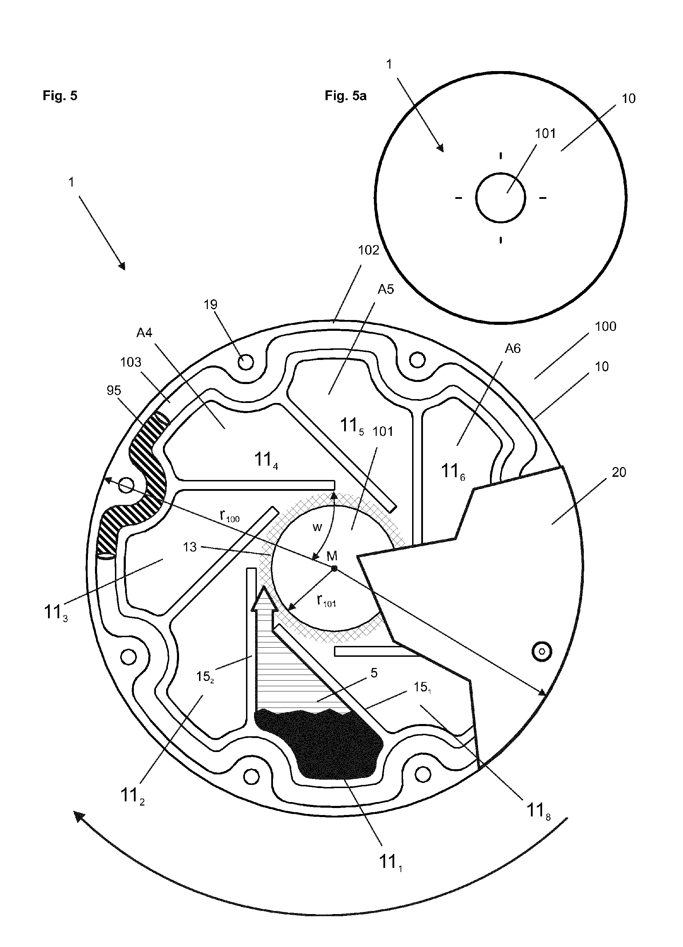

Figure 5 shows a second embodiment of an inventive heat engine 1 with an engine wheel 100 comprising a first wheel-plate 10 that comprises a structure with eight wall elements 15₁, 15₂, ..., 15₈, which delimit eight receptacles 11₁, 11₂, ..., 11₈, which communicate with one another through a common transfer channel 13 that is circularly surrounding the central hub or the inner driving collar 101, if present. The wall elements 15₁, 15₂, ..., 15₈, adjoin and extend from the outer collar 102 and are inclined into the same direction by an angle w relative to the radius of the engine wheel 100, which angle w is preferably within the range from 15°-30° and may be for example at least approximately 20°. Preferably, the length of the wall elements 15₁, 15₂, ..., 15₈ corresponds approximately to the difference between the radius r₁₀₀ of the engine wheel 100 and the radius r₁₀₁ of the central hub 101. With their end pieces, the wall elements 15₁, 15₂, ..., 15₈ delimit the communication ports of the receptacles 11₁, 11₂, ..., 11₈.

The transfer channel 13 has the form of a ring, which encloses the central hub 101. In this embodiment, the vapour 50 of the working substance 5, which is heated in the lowermost receptacle 11₁ is rising on one side of the central hub 101 and is collected by the neighbouring receptacles 11₂, 11₃, 11₄ on the same side of the central hub 101. The vapour 50 is condensing when it is reaching the related wall elements 15₂, ..., 15₄, which exhibit a temperature that is lower than the temperature of the working substance 5. The speed of the process taking place in heat engine 1 is proportional to the temperature gradient applied across the engine wheel 100.

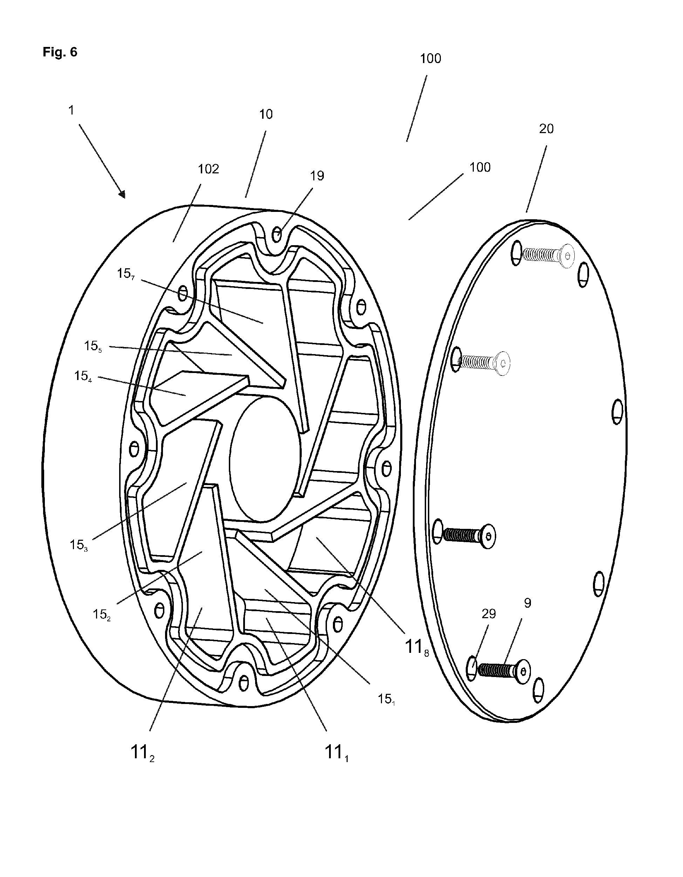

The structure of this engine wheel 100 is simpler than the structure of the engine wheel 100 shown in figure 1. Since in this embodiment only one working substance 5 is provided a good sealing of the peripheral parts of the first and second wheel-plates 10, 20 is sufficient. For this purpose the first wheel-plate 10 comprises a circular groove 103, in which a sealing ring 95 is present, that is compressed when the mounting screws 9 are tightened (see figure 6).

Figure 5a shows the engine wheel 100 of figure 5 from the other side with the hub 101 that extends in form of a cylinder into the engine wheel 100.

Figure 6 shows the heat engine 1 of figure 5 in spatial view with the wall elements 15₁, 15₂, ..., 15₈ extending from the outer collar 102 almost tangentially towards one side of the central hub 101, defining with their end-pieces the comparably narrow common transfer channel 13 that encircles the central hub 101. The central hub 101 is formed as a cylinder that is open towards the backside of the first wheel-plate 10 and that may receive the end of an axle or bearing shaft.

Figure 7a shows the heat engine 1 in the embodiment of figure 1 or in the embodiment of figure 5 with an axle 6 placed in the hub 101 and with a peripheral toothing 61. This figure therefore schematically shows that the inventive engine wheel 100 can be coupled with simple measures with any mechanical system. Further, two heat exchangers 75 and 76 are provided with which the thermal energy applied to the engine wheel 100 is a recuperated. The first heat exchanger 75 at the lower side of the engine wheel 100 transfers thermal energy E_{H} to the lowermost receptacle 11, 12, which is then transferred to the uppermost position, from where thermal energy E_{H} is picked up by the second heat exchanger 76 and transferred back to the first heat exchanger 75. By this measure the overall losses of the inventive heat engine 1 can significantly be reduced.

Figure 7b shows the heat engine 1 of figure 7a with a ball bearing 65 inserted in the central hub 101. Figure 7b further shows that the engine wheel 100 can be manufactured with small dimensions, particularly a very small thickness d2 in the range of a multiple of the wall thicknesses of the wheel-plates 10, 20 that can be achieved with current manufacturing technology. If the wall thickness is dw, then the thickness of the engine wheel 100 is d2 = 2*dw + p*dw; wherein p*dw represents the thickness or inner diameter of a receptacle. The factor p can be as small as 1 or smaller. With a larger diameter d1 of the engine wheel 100 the maximum obtainable momentum increases. However the diameter d1 can also be very small. With a diameter d3 of the inner hub of d3, the diameter d1 of the engine wheel 100 would be q times the wall thickness dw or r times the hub diameter d3. The factor r would typically be at least 2. The factor q could be at least as low as 10.

Figure 8 shows the heat engine 1 in the embodiment of figure 1 or in the embodiment of figure 5 equipped with a plurality of magnets 72 that interact with at least one bearing magnet 71 on the lower side and with at least one coil or coil system 73 on the upper side of the engine wheel 100. The engine wheel 100 is therefore magnetically suspended on the magnetic bearing 71 and can turn without mechanical losses. At the same time, the magnets 72 of the engine wheel 100 cause changes of the magnetic field to which the coil or coil system 73 is exposed. Consequently, currents are induced in the coil or coil system 73, which can be used for driving an electro motor or for charging an accumulator. Thermal energy E_{H} can therefore be transformed into electrical energy E_{E}, which can be used for any purpose.

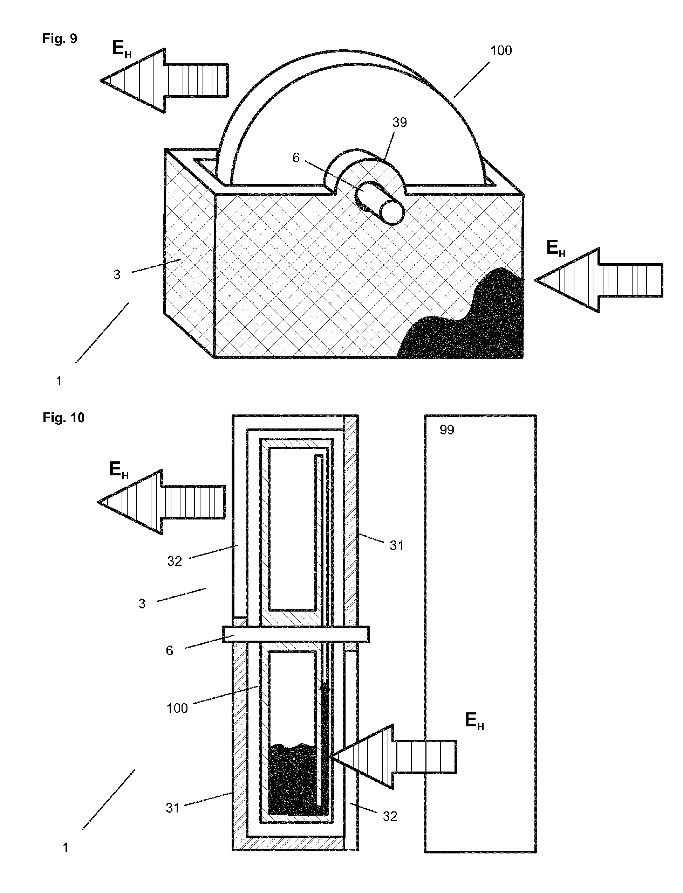

Figure 9 shows an inventive heat engine 1 with the engine wheel 100 for example as shown in figure 1 suspended in a bearing 39 of a housing 3, which embraces the lower part of the engine wheel 100. The housing 3, which acts as a heat collector, has a high thermal conductivity and a high heat capacity and is preferably made from metal or stone, such as soap stone. In order to absorb a maximum amount of radiation energy the housing 3 is preferably coloured in black or made from black coloured material. The housing 3, when exposed to radiation, will therefore have a temperature that is higher than the ambient temperature. The lower part of the engine wheel 100 will therefore be heated causing the working substance 5 to rise and starting the engine wheel 100 to turn.

Figure 10 shows an inventive heat engine 1 with the engine wheel 100 for example as shown in figure 1 suspended in a housing 3 that comprises a sections of high and low thermal conductivity 31, 32. A section 31 of high thermal conductivity that is neighbouring the lower part of the engine wheel 100 is facing an energy source 99 such as a human body. Thermal energy E_{H} provided by the energy source 99 can therefore enter the lower part of the housing 3, while the upper part of the housing 3 comprises a section of low thermal conductivity that is rejecting thermal energy E_{H}. The side of the lower part of the housing 3 that is facing away from the energy source 99 comprises a section of low thermal conductivity 31 as well, which ensures that the received thermal energy E_{H} cannot escape and is transferred to the lower part of the engine wheel 100 only. The side of the upper part of the housing 3 that is facing away from the energy source 99 comprises a section 32 of high thermal conductivity which ensures that thermal energy E_{H} can escape from the upper part of the engine wheel 100. Sections of low thermal conductivity 31 are preferably made from plastic, while sections of high thermal conductivity 32 may be metal inserts or simply windows in the housing. A heat engine 1 will therefore start activity as soon as it touches the energy source 99, e.g. the human body.

### References

[1] US243909A
[2] US2384168A
[3] US7694515B2
[4] Mother Earth News, April 1976, "Solar Engine: Wallace Minto's Newest Invention"

## Claims

1. Heat engine (1) comprising an engine wheel (100) having at least two receptacles (11A, 12A; 11B, 12B; 11C, 12C) opposing one another and at least one working substance (5, 5A; 5B; 5C) that is transferrable in at least one transfer channel (13; 13A, 13B, 13C) between said receptacles (11; 11A, 12A; 11B, 12B; 11C, 12C) under the impact of thermal energy, **wherein** the engine wheel (100) comprises a first wheel-plate (10) with a plurality of walls (15A, 15B, 15C, 102) on at least one side that delimit the receptacles (11; 11A, 12A; 11B, 12B; 11C, 12C) and the at least one transfer channel (13; 13A, 13B, 13C), which are further delimited by a second wheel-plate (20) that is connected to the first wheel-plate (10).

2. Heat engine (1) according to claim 1, **wherein** the first and the second wheel-plate (10, 20) and the walls (15A, 15B, 15C) delimit one or more separate transfer systems (A, B, C), each containing one of said working substances (5A; 5B; 5C) and each comprising a first one of said receptacles (11A; 11B; 11C) connected via a communication port and one of said transfer channels (13A: 13B; 13C) to a communication port of a second one of said receptacles (12A; 12B; 12C) and wherein the communication ports of the receptacles (11; 11A, 12A; 11B, 12B; 11C, 12C) are peripherally located.

3. Heat engine (1) according to claim 1 or 2, **wherein** the first wheel-plate (10) comprises a central hub or an inner driving collar (101) and/or an outer or peripheral collar (102) which forms one of said walls (15A, 15B, 15C, 102).

4. Heat engine (1) according to claim 1, 2 or 3, **wherein**, two, three or more transfer systems (A, B, C) are provided, with the related transfer channels (13A, 13B, 13C)
a) routed along the central side of the engine wheel (100); and/or
b) routed along the peripheral side of the engine wheel (100); and/or
c) routed partially along the central side and partially along the peripheral side of the engine wheel (100); and/or
d) routed with their complete length alternately along the central and the peripheral side of the engine wheel (100).

5. Heat engine (1) according to one of the claim 3 or 4, **wherein** at least one of the walls (15A, 15B, 15C) leads from the central hub or the inner driving collar (101) to the outer or peripheral collar (102) forming walls of at least a first and a second receptacles (11A, 11B) and a transfer channel (13A).

6. Heat engine (1) according to claim 5, **wherein** the at least one of the walls (15A, 15B, 15C) comprises a first wall segment (1501) aligned radially and/or a second wall segment (1502) aligned peripherally, said first and/or second wall segments (1501), which are extensions or branches of the at least one of the walls (15A, 15B, 15C) being arranged to separate one of the receptacles (11A, 11B) from the related transfer channel (13A; 13B) and defining output or entry ports of the receptacles (11A, 12A; 11B, 12B; 11C, 12C) at the peripheral side.

7. Heat engine (1) according to claim 1, **wherein** a number n of receptacles (11₁, 11₂, ..., 11₈) is provided that are delimited by the same number n of wall elements (15₁, 15₂,..., 15₈),
a) which are adjoining the outer collar (102),
b) which are inclined relative to the radius of the engine wheel (100) into the same direction by an angle w, which angle w is preferably within the range from 15°-30°,
c) which have a length that corresponds approximately to the difference between the radius (r₁₀₀) of the engine wheel (100) and the radius (r₁₀₁) of the central hub (101) and
d) which delimit with their end pieces the communication ports to the receptacles (11₁, 11₂, ..., 11₈);
which are communicating with a common transfer channel (13) that is circularly surrounding the central hub or the inner driving collar (101).

8. Heat engine (1) according to one of the claims 1-7, **wherein** the engine wheel (100) has a circular or regular or irregular polygonal form and wherein the first and the second wheel-plate (20) are preferably made from metal and/or wherein the first and second wheel-plate (10, 20) preferably are equivalent and/or complementary to one another.

9. Heat engine (1) according to one of the claims 1-8, **wherein** the first wheel-plate (10) and the second wheel-plate (20) are connected to one another by means of welding, by means of mounting screws (9), by means of an adhesive, by means of threaded flanges provided on the first and the second wheel-plate (10, 20) and/or wherein the connection between the first and the second wheel-plate (10, 20) is tightly sealed by a sealing element such as an O-ring or a sealing gasket may be applied between the first and the second wheel-plate.

10. Heat engine (1) according to one of the claims 1-9 **wherein** the engine wheel (100) is part of a device of art, amusement, fashion or science, particularly as a part of a watch or an electrical generator.

11. Heat engine (1) according to one of the claims 1 - 10, **wherein** the engine wheel (100) is provided with peripheral magnets (72) that are interacting with at least one bearing magnet (71) in such a way that the engine wheel (100) is magnetically suspended, and/or the engine wheel (100) is provided with peripheral magnets (72) that are interacting with a coil or a coil system (73) and thus induce a current in the coil or a coil system (73), when the engine wheel (100) is turned.

12. Heat engine (1) according to one of the claims 1 - 11, **wherein** a first heat exchanger (75) is provided at the lower side of the engine wheel (100) and a second heat exchanger (76) is provided at the upper side of the engine wheel (100), and wherein the heat recuperated at the second heat exchanger (76) is preferably transferred to the first heat exchanger (75).

13. Heat engine (1) according to one of the claims 1 - 12, **wherein** the at least one substance (5A; 5B; 5C) and the pressure in the related transfer systems (A, B, C) are selected in order to obtain a desired boiling point of the at least one working substance (5, 5A; 5B; 5C).

14. Heat engine (1) according to one of the claims 1 - 13, **wherein** the engine wheel (100) is suspended in a housing (3) with high thermal conductivity that embraces the lower part of the engine wheel (100) or that is suspended in a housing (3) with sections of high and low thermal conductivity (31, 32) that are arranged in such a way that at least one section of high thermal conductivity is arranged each on the upper and lower part of the engine wheel (100) preferably on opposite sides.

15. Heat engine (1) according to one of the claims 1-14 **wherein** the engine wheel (100) is a toothed wheel having a toothing (60) or is coupled with an axle (6) that is held by a bearing
